(19) Europäisches Patentamt / European Patent Office / Office européen des brevets

(11) **EP 4 170 299 B1**

(12) **EUROPEAN PATENT SPECIFICATION**

(45) Date of publication and mention
of the grant of the patent:
**13.08.2025 Bulletin 2025/33**

(21) Application number: **22201810.3**

(22) Date of filing: **17.10.2022**

(51) International Patent Classification (IPC):
**G01G 19/08** (2006.01)

(52) Cooperative Patent Classification (CPC):
**G01G 19/086**

(54) **METHOD OF ESTIMATING THE MASS OF A MOVING VEHICLE, CORRESPONDING SYSTEM AND COMPUTER PROGRAM PRODUCT**

VERFAHREN ZUR SCHÄTZUNG DER MASSE EINES BEWEGLICHEN FAHRZEUGS, ENTSPRECHENDES SYSTEM UND COMPUTERPROGRAMMPRODUKT

PROCEDÉ D'ESTIMATION DE LA MASSE D'UN VEHICULE EN MOUVEMENT, SYSTEME CORRESPONDANT ET PRODUIT PROGRAMME D'ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.10.2021 IT 202100026861**

(43) Date of publication of application:
**26.04.2023 Bulletin 2023/17**

(73) Proprietor: **Iveco S.p.A.**
**10156 Torino (IT)**

(72) Inventors:
• **VAGLIO, Mr. Paolo**
**I-10156 Torino (IT)**
• **BARROSO SUDO, Mr. Jorge**
**I-10156 Torino (IT)**
• **SILVESTRI, Mr. Mauro**
**I-10156 Torino (IT)**

(74) Representative: **Buzzi, Notaro & Antonielli d'Oulx S.p.A.**
**Corso Vittorio Emanuele II, 6**
**10123 Torino (IT)**

(56) References cited:
**GB-A- 2 535 773     US-A1- 2019 226 905**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the invention

The present invention relates to methods for estimating the mass of a moving vehicle, and to corresponding electronic systems and computer program products.

In particular, the invention relates to a method in which the mass of the vehicle is estimated as a function of the values of one or more parameters indicative of the dynamic state of the vehicle, sensed during a sampling interval whilst the vehicle is moving and its dynamic state meets a given condition of acceleration.

Prior art

Methods of the type referred to above are known in the art, but may be far from robust and/or may produce an estimate of the mass of the vehicle that is far from precise.

For instance, document US 2019/0226905 A1 discloses a method for determining the total mass of an automotive vehicle on the basis of data of a communication network and parameters of the vehicle. An estimation of the total laden mass of the vehicle, of the speed of the vehicle and of the slope of the road is determined at an instant by applying the fundamental equation of dynamics and as a function of the values of the total mass of the vehicle, of the speed of the vehicle and of the slope of the road at a previous instant.

Furthermore, document GB 2535773 A discloses a system for determining the mass of a vehicle with an engine applying a force output through a powertrain to the wheels. The system has an initial mass estimation, based on passenger occupants, for example via seat belt sensors. Further force estimation and acceleration measurements are made and used to estimate mass using a recursive least squares (RLS) algorithm. User behaviour signals, such as from seat belts or opening of doors, fuel port, boot or trunk provides a new initial estimation. Fuel level can be measured to calculate fuel mass, providing a fuel independent force value in mass calculation. Threshold comparison allows for the disregard of values not meeting predetermined conditions such as meass range, vehicle speed, or time after rest or gear shift operation. Tyre pressure or braking can be monitored or controlled on the basis of the mass estimates.

Object of the invention

The object of one or more embodiments is to provide a method for estimating the mass of a moving vehicle that is robust in regard to the variability of the driving conditions and that produces a precise estimate of the mass of the vehicle.

Summary of the invention

According to one or more embodiments, such an object can be achieved by means of a method having the features set forth in the claims that follow.

One or more embodiments may refer to a corresponding electronic system, which can be mounted on board a vehicle.

One or more embodiments may refer to a corresponding computer program product that can be loaded into the memory of at least one processing circuit (e.g., an electronic control unit or ECU of a vehicle) and comprises software code portions for carrying out the steps of the method when the product is run on the at least one processing circuit. As used herein, reference to such a computer program product is understood as being equivalent to reference to a computer-readable means containing instructions for controlling the processing system in order to co-ordinate implementation of the method according to one or more embodiments. Reference to "at least one" processing circuit is intended to highlight the possibility of one or more embodiments being implemented in modular and/or distributed form: for example, one or more embodiments may envisage interaction between a number of electronic control units of the vehicle, such as units for sensing data (using sensors) and dataprocessing units.

The claims form an integral part of the technical teaching provided herein in relation to the embodiments.

In brief, one or more embodiments refer to a method for estimating the mass of a moving vehicle, as defined by the wording of the appended claims.

Brief description of the figures

Various embodiments will now be described, purely by way of example, with reference to the annexed figures, wherein:

-    Figure 1 is a block diagram of an electronic system configured to estimate the mass of a moving vehicle according to one or more embodiments of the present disclosure;

- Figure 2 is a diagram exemplifying the chain of transmission of motion of a vehicle;
- Figure 3 is a diagram exemplifying a vehicle in a given driving condition;
- Figure 4 is a block diagram of a module for estimating the mass of a vehicle according to one or more embodiments of the present disclosure;
- Figure 5 is a diagram exemplifying details of implementation of one or more embodiments of the present disclosure;
- Figure 6 is a block diagram of a module for estimating the mass of a vehicle according to a preferred embodiment of the present disclosure; and
- Figure 7 is a block diagram of a module for estimating the mass of a vehicle according to another preferred embodiment of the present disclosure.

<u>Detailed description</u>

In the ensuing description one or more specific details are illustrated, aimed at enabling an in-depth understanding of examples of embodiments of this description. The embodiments may be obtained without one or more of the specific details, or with other methods, components, materials, etc. In other cases, known structures, materials, or operations are not illustrated or described in the detail in such a way that certain aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Consequently, phrases such as "in an embodiment" or "in one embodiment" that may be present in one or more points of the present description do not necessarily refer to one and the same embodiment. Moreover, particular configurations, structures, or characteristics may be combined in any adequate way in one or more embodiments.

In all the figures annexed hereto, unless the context indicates otherwise, parts or elements that are similar are designated by the same references/numbers and a corresponding description will not be repeated for reasons of brevity.

The references used herein are provided merely for convenience and hence do not define the sphere of protection or the scope of the embodiments.

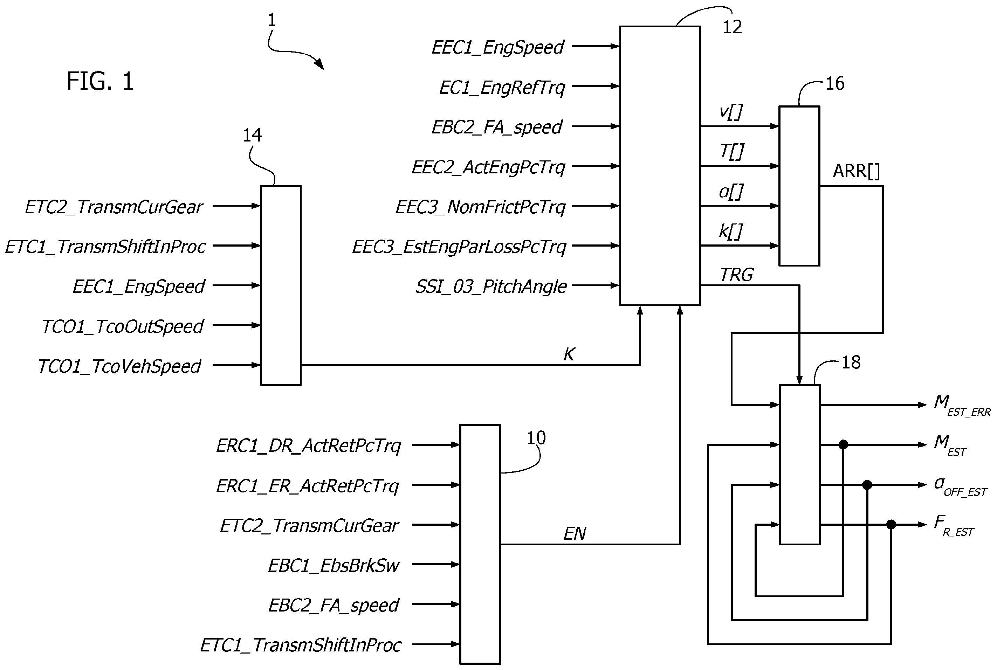

Figure 1 is a block diagram of an electronic system 1 configured to implement a method for estimating the mass of a moving vehicle, when the transmission of the vehicle is engaged, via execution of an estimation algorithm.

The system 1 comprises an enabling module 10 configured to sense one or more parameters indicative of the dynamic state of the vehicle (for example, by receiving one or more messages from a CAN - Controller Area Network - of the vehicle, where each message comprises one or more signals, i.e., the values of one or more parameters) and process the values of the sensed parameters in order to determine, as a function thereof, whether the dynamic state of the vehicle meets a given condition of acceleration. For instance, the enabling module 10 receives from the message ERC1 a signal *ERC1_DR_ActRetPcTrq* indicative of the fact that a retarder device of the transmission is activated, from the message ERC1 a signal *ERC1_ER_ActRetPcTrq* indicative of the fact that a retarder device of the engine is activated, from the message ETC2 a signal *ETC2_TransmCurGear* indicative of the gear currently engaged, from the message EBC1 a signal *EBC1_EbsBrkSw* indicative of the fact that an EBS (Electronic Braking System) is activated, from the message EBC2 a signal *EBC2_FA_speed* indicative of the travel speed of the vehicle (sensed by one or more sensors mounted on the axle shafts of one or more wheels), and from the message ETC1 a signal *ETC1_TransmShiftinProc* indicative of the fact that a gear change is in progress.

The enabling module 10 is configured to process the signals received (some of which are listed above purely by way of non-limiting example) and determine whether the dynamic state of the vehicle meets the condition of acceleration necessary for proper estimation of the mass. For instance, the conditions to be met may be one or more of the following:

- the vehicle must be moving in forward gear;
- the speed of the vehicle must be lower than a certain maximum threshold, for example equal to 50 km/h (optionally, by implementing a comparison with hysteresis between the sensed speed and the maximum threshold);
- the speed of the vehicle must be higher than a certain minimum threshold (optionally, by implementing a comparison with hysteresis between the sensed speed and the minimum threshold);
- the (longitudinal) acceleration of the vehicle must be higher than a certain minimum threshold (optionally, by implementing a comparison with hysteresis between the sensed acceleration and the respective minimum threshold);
- there must not be any gear change in progress (for example, the clutch must be in a closed condition, with a slipping coefficient lower than 0.05, i.e., a percentage difference between the r.p.m. upstream of the clutch and the r.p.m. downstream of the clutch of less than 5%);
- a gear must be engaged (i.e., the transmission must not be in "neutral");
- the retarder device of the transmission must not be activated;

- the retarder device of the engine must not be activated;
- the brakes of the vehicle must not be activated;
- the brake-assist systems, such as ABS (Antilock Braking System) and EBS (Electronic Braking System) must not be intervening; and
- no anomalies (for example, no timeout message on the CAN) must be detected on the communication network of the vehicle.

In the case where the module 10 does not receive a signal directly indicating the acceleration of the vehicle, the acceleration can be computed as a function of the speed signal *EBC2_FA_speed.*

If the conditions referred to above (or a subset thereof, according to the specific embodiment) are met, the enabling module 10 asserts an enable signal EN (for example, it sets it at the high logic value) to signal that the vehicle is in a dynamic condition suitable for starting the sampling of the data necessary for estimating the mass (for example, when the acceleration of the vehicle is higher than a given threshold). The enable signal EN is received in a data-acquisition module 12.

The person skilled in the sector will understand that the term "acceleration" of the vehicle is here to be understood in absolute value in so far as also a state of deceleration of the vehicle may be suitable for starting detection of the data necessary for estimating the mass. Consequently, the enabling module 10 may be configured for verifying whether the absolute value of the (longitudinal) acceleration $a_V$ of the vehicle is higher than the respective minimum threshold $a_{V,TH}$: | $a_V$| > $a_{V,TH}$.

The data-acquisition module 12 is configured to sample and store the ordered sequences of values of a plurality of parameters of the vehicle, during a sampling interval, in response to the fact that the signal *EN* is asserted. The duration of the sampling interval may be fixed or else configurable, and may for example be in the region of some seconds, such as 2 seconds, 5 seconds, or 10 seconds. The plurality of parameters sensed by the data-acquisition module 12 comprises the speed of the vehicle, the (net) torque delivered by the engine of the vehicle, the angle of longitudinal inclination of the vehicle with respect to the horizontal, and the coefficient k, i.e., the transmission ratio between the crankshaft and the drive wheels. In particular, the (net) torque delivered by the engine of the vehicle may be computed by the module 12 as the torque indicated by the engine decreased by the losses due to the parasitic effects of the engine and to frictional factors of the engine.

For instance, as illustrated in Figure 1, the data-acquisition module 12 receives (for example from the CAN) from the message EEC1 a signal *EEC1_EngSpeed* indicative of the rotational speed of the crankshaft, from the message EC1 a signal *EC1_EngRefTrq* indicative of a reference engine torque (expressed in Nm) for all the positive torques expressed as percentages, from the message EBC2 a signal *EBC2_FA_speed* indicative of the travel speed of the vehicle, from the message EEC2 a signal *EEC2_ActEngPcTrq* indicative of an engine torque (expressed as a percentage with respect to the reference torque *EC1_EngRefTrq*), from the message EEC3 a signal *EEC3_NomFrictPcTrq* indicative of a nominal negative torque (expressed as a percentage with respect to the reference torque *EC1_EngRefTrq*) due to friction and/or other loads internal to the engine, from the message EEC3 a signal *EEC3_ExtengParLossPcTrq* indicative of a nominal negative torque (expressed as a percentage with respect to the reference torque *EC1_EngRefTrq*) due to parasitic effects such as auxiliary vehicle loads external to the engine, and from the message SSI a signal *SSI_03_PitchAngle* indicative of the angle of longitudinal inclination of the vehicle with respect to the horizontal. In addition, the data-acquisition module 12 receives from a module for computing the transmission ratio 14 a signal K indicative of the coefficient k.

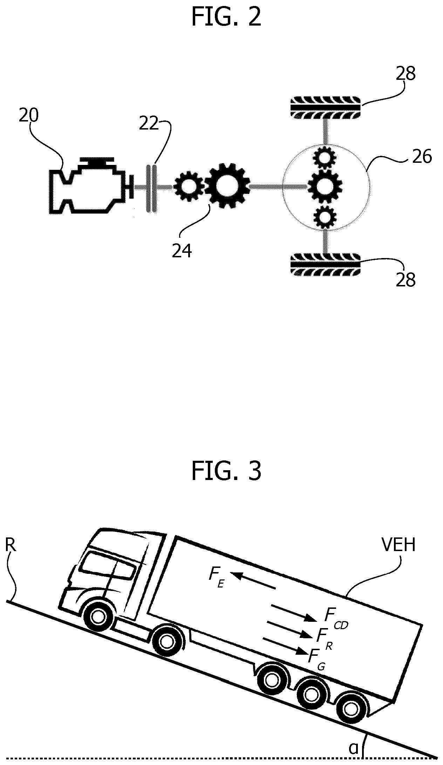

With reference to Figure 2, the chain of transmission of motion of a vehicle may be represented schematically by an engine 20 having an output shaft coupled to the first disk of a clutch 22. The second disk of the clutch 22 is coupled to the input shaft of a gearbox 24. The output shaft of the gearbox 24 is connected to a differential device 26 arranged in the axle of the drive wheels. Two output shafts of the differential device 26 (i.e., the axle shafts) are connected to the respective drive wheels 28. The transmission ratio of the gearbox 24 is designated by $g_r$, the transmission ratio of the differential 26 is designated by $a_r$, and the radius of the drive wheels 28 is designated by r. By definition, the coefficient k can hence be computed according to equation 1 below:

$$k = \frac{g_r \cdot a_r}{r} \qquad\qquad (1)$$

In one or more embodiments, however, the coefficient k may be computed by the module 14 as a function of the rotational speed of the engine 20 and the travel speed of the vehicle, according to equation 2 below:

$$k = PT1 \cdot \frac{\omega_e}{v} \qquad\qquad (2)$$

where PT1 is a function of a first-order lowpass-filter type, $\omega_e$ is the rotational speed of the engine, and v is the speed of the vehicle. In particular, if the speed $\omega_e$ is expressed in r.p.m. and the speed v is expressed in km/h, the equation 2 can be rewritten as follows:

$$k = PT1 \cdot \frac{\omega_e \cdot 2\pi/60}{v/3.6} \qquad\qquad (3)$$

For instance, as illustrated in Figure 1, the module for computing the transmission ratio 14 receives (for example, from the CAN) the signals *ETC2_TransmCurGear, ETC1_TransmShiftinProc, EEC1_EngSpeed* already described previously, as well as from the message TCO1 a signal *TCO1_TcoOutSpeed* indicative of the rotational speed of the output shaft of the gearbox and a signal *TCO1_TcoVehSpeed* indicative of the speed of the vehicle sensed by the tachograph, and processes these signals to determine the value of the coefficient k.

Consequently, during a sampling period, the data-acquisition module 12 can store in a memory area 16 (for example, a buffer) a vector v[] comprising the sensed samples of the speed of the vehicle, a vector T[] comprising the sensed samples of the (net) torque delivered by the engine, a vector $\alpha$[] comprising the sensed samples of the angle of longitudinal inclination of the vehicle, and a vector k[] comprising the computed samples of the coefficient k.

If, instead, the enable signal EN is not asserted (i.e., if the dynamic state of the vehicle does not meet the condition of acceleration discussed previously), the vectors v[], T[], $\alpha$[] and k[] are not filled (i.e., the data are not sampled and are not stored in the memory area 16). The first value of the vector k[] can be set at a default value (for example, -1) to indicate to the estimation module 18 that it must set the value of the estimated speed at the sensed (or real) value of speed. If the enable signal *EN* is de-asserted before the memory buffer 16 is completely filled with sampled data, sampling of the data can be resumed to fill the memory buffer 16 when the signal *EN* is asserted again. Consequently, the vectors v[], T[], $\alpha$[], and k[] stored in the memory buffer 16 may comprise values corresponding to a plurality of separate time segments. The value of the vector k[] stored at each start of a new sampling time segment can be set at the default value (for example, -1) to indicate to the estimation module 18 that it must set the corresponding values of the estimated speeds at the sensed (or real) value of speed at that instant.

At the end of the sampling period, each of the vectors v[], T[], $\alpha$[], and k[] hence contains one and the same number N of corresponding samples, which may be in the region of some hundreds (for example, 100, 200, or 500), as exemplified in Table I below, where v(i), T(i), $\alpha$(i), and k(i) denote the values stored in the respective vectors v[], T[], $\alpha$[], and k[] at the generic instant t = i:

Table I

|  | t = 1 | t = 2 | t=3 | ... | t = N |
|---|---|---|---|---|---|
| v[] | v(1) | v(2) | v(3) | ... | v(N) |
| T[] | T(1) | T(2) | T(3) | ... | T(N) |
| $\alpha$[] | $\alpha$(1) | $\alpha$(2) | $\alpha$(3) | ... | $\alpha$(N) |
| k[] | k(1) | k(2) | k(3) | ... | k(N) |

At the end of the sampling period (when the buffer 16 is completely filled), the data-acquisition module 12 asserts a signal *TRG,* which is received by an estimation module 18. In response to the fact that the signal *TRG* is asserted, the estimation module reads the data stored in the memory area 16, represented as a whole in Figure 1 as an array ARR[] (i.e., the set of the vectors v[], T[], $\alpha$[], and k[]), and processes them according to the method described in what follows in order to estimate:

- a value of the mass of the vehicle $M_{EST}$;
- a value of difference between the sensed angle of longitudinal inclination and the real angle of longitudinal inclination, $\alpha_{OFF\_EST}$; and
- a value of the force of rolling resistance $F_{R\_EST}$.

In order to understand operation of the estimation module 18, reference may first be made to Figure 3, which exemplifies a vehicle VEH in a driving condition. The vehicle VEH travels along a road R having a certain inclination $\alpha$ with respect to the horizontal and is subject to the following forces, all parallel to the surface of the road R: a force $F_E$ of forward propulsion due to the action of the engine of the vehicle, a braking force $F_{CD}$ due to the aerodynamic resistance (which is dependent on the speed of the vehicle), a braking force $F_R$ due to the rolling resistance, and the component of the weight force $F_G$ parallel to the surface of the road (which in the example of Figure 3 is a braking force, but could be a propulsive force in the case of a descending stretch of road). If the (estimated or real) speed v(i) of the vehicle is known at a given instant t = i, the speed $v_{est}$(i + 1) of the vehicle at a subsequent instant t = i+1 can hence be estimated according to the equation 4 below:

$$v_{est}(i + 1) = v_{est}(i) + a(i) \cdot \Delta t = v_{est}(i) + \frac{F_E - F_R - F_{CD} - F_G}{m + I_C \cdot k^2(i)} \cdot \Delta t \qquad (4)$$

where a(i) is the acceleration to which the vehicle VEH is subject in the direction parallel to the surface of the road R at the instant t = i, $\Delta$t is the time interval between two successive sampling instants, m is the mass of the vehicle VEH, Ic is the moment of inertia of the engine (or more in general of the roatting parts, comprising also the moments of inertia of the clutch 22, of the gearbox 24, of the differential 26, and of the wheels 28), and k is the transmission coefficient referred to previously.

The values of the forces $F_E$, $F_{CD}$ and $F_G$ can be computed according to equations 5, 6, and 7 below:

$$F_E = T(i) \cdot k(i) \qquad (5)$$

$$F_{CD} = A_{air} \cdot v_{est}^2(i) \qquad (6)$$

$$F_G = mg \cdot sin(\alpha(i) + \alpha_{OFF}) \qquad (7)$$

where: T(i) is the (net) torque delivered by the engine at the instant t = i; k(i) is the transmission coefficient computed at the instant t = i; $A_{air}$ is a coefficient depending upon the density of the air, the area of the front section of the vehicle, and the coefficient of aerodynamic resistance; $v_{est}$(i) is the speed of the vehicle estimated at the instant t = i; g is the acceleration of gravity (g ≈ 9.81 m/s$^2$); $\alpha$(i) is the sensed angle of longitudinal inclination at the instant t = i; and $\alpha_{OFF}$ is the difference between the sensed angle of longitudinal inclination and the real angle of longitudinal inclination. The difference $\alpha_{OFF}$ may be due, for example, to the fact that the inclination sensor is mounted on the frame of the vehicle, but the frame may in turn be inclined with respect to the plane of the road, for example because the load of the vehicle is set in a non-uniform way in the loading area.

As has been anticipated, in one or more embodiments the net torque T(i) may be computed as the torque indicated by the engine ($T_{indicated}$) decreased by the losses due to the parasitic effects of the engine ($T_{parasitic}$) and to frictional factors of the engine ($T_{friction}$), according to equation 8 below:

$$T(i) = T_{indicated}(i) - T_{parasitic}(i) - T_{friction}(i) \qquad (8)$$

In one or more embodiments, the moment of inertia Ic may be computed as the sum of the moments of inertia of all the rotating masses (engine $I_e$, clutch $I_{cl}$, gearbox $I_{gb}$, differential $I_{diff}$, wheels $I_w$) and may hence be computed according to equation 9 below:

$$I_C = I_e + I_{cl} + I_{gb} + \frac{I_{diff}}{\tau_{gb}^2} + \frac{I_w}{\left(\tau_{gb} \cdot \tau_{diff}\right)^2} \qquad (9)$$

where $\tau_{gb}$ is the gear ratio of the gearbox 24 and $\tau_{diff}$ is the transmission ratio at the axle 26.

In one or more embodiments, the coefficient $A_{air}$ can be computed according to equation 10 below:

$$A_{air} = \frac{1}{2} \cdot \rho \cdot C_d \cdot S_{aero} \qquad (10)$$

where $\rho$ is the density of air, $C_d$ is the coefficient of aerodynamic resistance, and $S_{aero}$ is the area of the front section of the vehicle.

Consequently, equation 4 can be re-written as follows (equation 11):

$$v_{est}(i+1) = v_{est}(i)$$
$$+ \frac{T(i) \cdot k(i) - F_R - A_{air} \cdot v_{est}^2(i) - mg \cdot sin(\alpha(i) + \alpha_{OFF})}{m + I_C \cdot k^2(i)} \cdot \Delta t \qquad (11)$$

As may be noted from equation 11, the speed of the vehicle at an instant t = i+1 can then be estimated as a function of the values of the parameters v(i), T(i), k(i), and $\alpha$(i) stored in the array ARR[], as a function of some known quantities (i.e., the coefficient $A_{air}$ and the moment of inertia $I_C$ proper to the vehicle VEH) and as a function of three further unknown parameters $F_R$, m, and $\alpha_{OFF}$. The estimation module 18 implements an iterative procedure for determining the values of one or more of the parameters $F_R$, m, and $\alpha_{OFF}$.

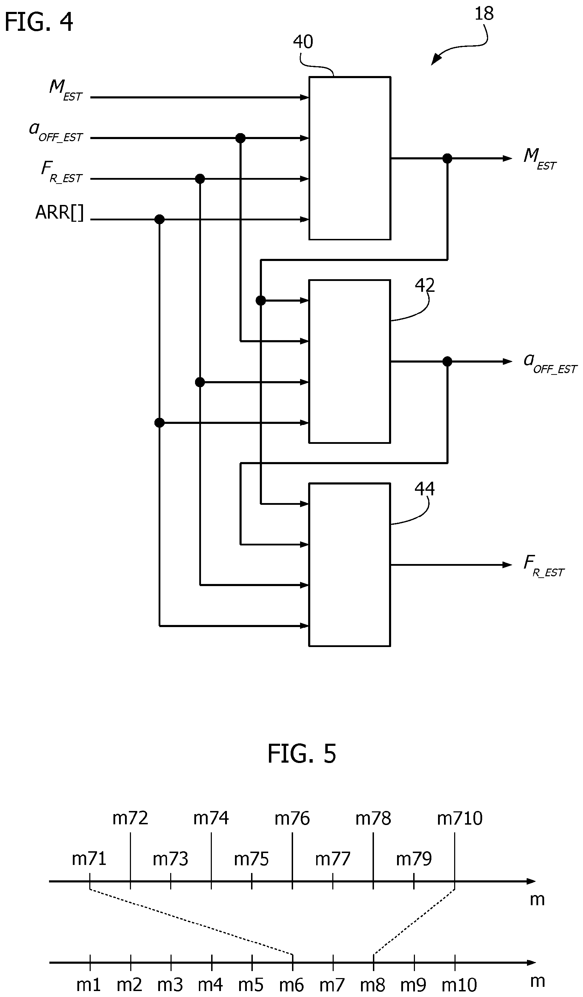

In particular, as illustrated in Figure 4, the estimation module 18 may comprise a module for estimating the mass 40, a module for estimating the inclination offset 42, and a module for estimating the force of rolling resistance 44, which are arranged cascaded to one another.

At the first iteration, the module for estimating the mass 40 receives the data ARR[] stored in the memory 16, as well as the values of the known parameters $A_{air}$ and $I_C$. The module 40 moreover receives a first default value m1 of the mass m, and default values of the inclination offset $\alpha_{OFF}$ and of the force of rolling resistance $F_R$. For each sampling instant (subsequent to the first), the module 40 computes an estimated value of the speed of the vehicle $v_{est}$ using equation 11 and producing a sequence of estimated values of the speed, as indicated in Table II below.

Table II

| $v_{est,m1}$[] | t = 1 | t = 2 | t = 3 | ... | t = N |
|---|---|---|---|---|---|
| $v_{est,m1}$[] | $v_{est,m1}(1) = v(1)$ | $v_{est,m1}(2)$ | $v_{est,m1}(3)$ | ... | $v_{est,m1}(N)$ |

As indicated in Table II, the first estimated value of the speed $v_{est,m1}(1)$ is set equal to the sampled value v(1) at instant t = 1, when the enable signal *EN* was asserted (i.e., it passed from 0 to 1). Likewise, in the case where the buffer 16 comprises data sensed during a number of separate time segments (i.e., if the signal EN has been de-asserted and re-asserted at least once during the data-sampling step), the j-th estimated value of the speed $v_{est,m1}(j)$ is set equal to the sampled value v(j) at instant t = j when the enable signal EN was once again asserted; this in so far as equation 11 enables estimation of each value of speed as a function of a previous value of speed. As has been anticipated, this operation can be obtained by storing a default value (such as -1) in each element k(j) of the vector k[] that corresponds to the start of a new sampling time segment, and by storing the values of sampled speeds v(j) at the instants t = j in the respective elements $v_{est,m1}(j)$ of the vector $v_{est,m1}$[] whenever the default value (-1) is detected in the vector k[].

Once the values of estimated speed are computed for each sampling instant as a function of the value of mass m1, the module 40 computes an error parameter ERR(m1) defined as the sum of the squared errors between the values of estimated speed $v_{est}$ and the corresponding values of sensed speed v, according to equation 12 below:

$$ERR(m1) = \sum_{i=1}^{N} \left(v_{est,m1}(i) - v(i)\right)^2 \qquad (12)$$

Once the error parameters ERR(m1) are computed, the module 40 repeats processing for a second value of mass m2, keeping the default values of the parameters $\alpha_{OFF}$ and $F_R$ constant, to produce a second sequence of estimated values of the speed $v_{est,m2}$[] and compute a second error parameter ERR(m2). As shown in Figure 5, processing by the module 40 can be repeated iteratively, varying the value of the mass m in a set of values that comprises M discrete ordered values (for example, ten values m1, ..., m10 equally spaced apart) and producing a corresponding set of values ERR(m1), ..., ERR(m10) of the error parameter. At the end of the iterative cycle carried out by the module 40, the value of mass corresponding to the lowest value of the error parameter ERR is selected as value of estimation the mass of the vehicle $M_{EST}$.

In one or more preferred embodiments, the procedure carried out by the module 40 may comprise execution of further iterative cycles that make it possible to render more precise estimation of the mass of the vehicle, performing a finer division of the range of values over which the value of the parameter mass is made to vary. For instance, once a given value of mass (for example m7) has been identified in the set of values m1, ..., m10 at the end of the first iterative cycle, the procedure comprises identifying a new range of discrete ordered values centered around said identified value. For instance, the new range of values may comprise the same number M of values equally spaced apart from one another of the previous range, but may have a width equal to twice the difference between two consecutive ordered values of the previous range (in the example here considered and illustrated in Figure 5, if the value of mass m7 is selected at the end of the first cycle, the values of mass used in the second cycle may be ten values equally spaced apart from one another m71, ..., m710 comprised between m6 and m8). The procedure may be repeated a number of times, iteratively recalling the module 40 and using each time a range of values of the mass more refined than the previous one in order to increase the precision of the estimate. The value selected at the end of execution of the last cycle is supplied at output by the module 40 as best estimate of the mass of the vehicle $M_{EST}$.

Once an estimated value of mass $M_{EST}$ has been determined, the procedure implemented by the estimation module 18 recalls execution of the module for estimating the inclination offset 42. At the first iteration, the module for estimating the inclination offset 42 receives the data ARR[] stored in the memory 16, as well as the values of the known parameters $A_{air}$ and $I_C$. The module 42 moreover receives a first default value $\alpha_{OFF}1$ of the inclination offset $\alpha_{OFF}$, the previously estimated value of the mass $M_{EST}$, and the default value of the force of rolling resistance $F_R$. In a way similar to the module 40, for each sampling instant (subsequent to the first) the module 42 computes an estimated value of the speed of the vehicle $v_{est}$ using equation 11 and producing a sequence of estimated values of the speed, as indicated in Table III below.

Table III

| $v_{est,\alpha OFF1}[]$ | t = 1 | t = 2 | .. | t = N |
|---|---|---|---|---|
| | $v_{est,\alpha OFF1}(1) = v(1)$ | $v_{est,\alpha OFF1}(2)$ | .. | $v_{est,\alpha OFF1}(N)$ |

Also in this case, the first estimated value of the speed $v_{est,\alpha OFF1}(1)$ is set equal to the sampled value $v(1)$ at instant $t = 1$, when the enable signal EN was asserted (i.e., it passed from 0 to 1). Likewise, in the case where the buffer 16 comprises data sensed during a number of separate time segments, the j-th estimated value of the speed $v_{est,\alpha OFF1}(j)$ is set equal to the sampled value $v(j)$ at instant $t = j$ when the enable signal EN was once again asserted. As has been anticipated, this operation can be obtained by storing a default value (such as -1) in each element $k(j)$ of the vector $k[]$ that corresponds to the start of a new sampling time segment and by storing the values of sampled speeds $v(j)$ at instants $t = j$ in the respective elements $v_{est,m1}(j)$ of the vector $v_{est,m1}[]$ whenever the default value (-1) is detected in the vector $k[]$.

Once the values of estimated speed have been computed for each sampling instant as a function of the offset value $\alpha_{OFF}1$, the module 42 computes an error parameter $ERR(\alpha_{OFF}1)$ defined as the sum of the squared errors between the values of estimated speed $v_{est}$ and the values of sensed speed v, according to equation 13 below:

$$ERR(\alpha_{OFF}1) = \sum_{i=1}^{N}\left(v_{est,\alpha OFF1}(i) - v(i)\right)^2 \qquad (13)$$

Once the error parameter $ERR(\alpha_{OFF}1)$ has been computed, the module 42 repeats processing for a second offset value $\alpha_{OFF}2$, keeping the values of the parameters $M_{EST}$ and $F_R$ constant, to produce a second sequence of estimated values of the speed $v_{est,\alpha OFF2}[]$ and compute a second error parameter $ERR(\alpha_{OFF}2)$. In a way similar to what has been described with reference to the processing executed by the module 40, processing by the module 42 can be repeated iteratively, varying the value of the offset $\alpha_{OFF}$ in a set of values that comprises M discrete ordered values and producing a corresponding set of values of the error parameter. At the end of the iterative cycle carried out by the module 42, the offset value corresponding to the lowest value of the error parameter ERR is selected as estimation value $\alpha_{OFF\_EST}$ of the offset between the sensed inclination and the real inclination of the vehicle.

In one or more preferred embodiments, the method carried out by the module 42 may comprise execution of further iterative cycles that make it possible to render more precise estimation of the inclination offset of the vehicle, performing a finer division of the range of values over which the value of the parameter offset is made to vary, in a way similar to what has already been described previously for estimation of the mass. The value selected at the end of execution of the last cycle is supplied at output by the module 42 as best estimate of the inclination offset of the vehicle $\alpha_{OFF\_EST}$.

Once an estimated value of the inclination offset $\alpha_{OFF\_EST}$ has been determined, the procedure implemented by the estimation module 18 recalls execution of the module for estimating the force of rolling resistance 44, which operates in a way similar to the modules 40 and 42. At the first iteration, the module for estimating the force of rolling resistance 44 receives the data ARR[] stored in the memory 16, as well as the values of the known parameters $A_{air}$ and Ic. The module 44 moreover receives a first default value $F_R1$ of the force of rolling resistance, and the previously estimated values of the mass $M_{EST}$ and of the inclination offset $\alpha_{OFF\_EST}$. In a way similar to the modules 40 and 42, for each sampling instant (subsequent to the first) the module 44 computes an estimated value of the speed of the vehicle $v_{est}$ using equation 11, and produces a sequence of estimated values of the speed, as indicated in Table IV below.

8

Table IV

| | t = 1 | t = 2 | .. | t = N |
|---|---|---|---|---|
| $v_{est,FR1}[]$ | $v_{est,FR1}(1) = v(1)$ | $v_{est,FR1}(2)$ | .. | $v_{est,FR1}(N)$ |

Also in this case, the first estimated value of the speed $v_{est,FR1}(1)$ is set equal to the sampled value v(1) at instant t = 1, when the enable signal EN was asserted (i.e., it passed from 0 to 1). Likewise, in the case where the buffer 16 comprises data sensed during a number of separate time segments, the j-th estimated value of the speed $v_{est,FR1}(j)$ is set equal to the sampled value v(j) at instant t = j when the enable signal *EN* was once again asserted. As has been anticipated, this operation can be obtained by storing a default value (such as -1) in each element k(j) of the vector k[] that corresponds to the start of a new sampling time segment, and by storing the values of sampled speeds v(j) at instants t = j in the respective elements $v_{est,m1}(j)$ of the vector $v_{est,m1}[]$ whenever the default value (-1) is detected in the vector k[].

Once the values of estimated speed have been computed for each sampling instant as a function of the value of force $F_R1$, the module 44 computes an error parameter $ERR(F_R1)$ defined as the sum of the squared errors between the values of estimated speed $v_{est}$ and the values of sensed speed v, according to equation 14 below:

$$ERR(F_R1) = \sum_{i=1}^{N} \left( v_{est,FR1}(i) - v(i) \right)^2 \qquad (14)$$

Once the error parameter $ERR(F_R1)$ has been computed, the module 44 repeats processing for a second value of force $F_R2$, keeping the values of the parameters $M_{EST}$ and $\alpha_{OFF\_EST}$ constant, to produce a second sequence of estimated values of the speed $v_{est,FR2}[]$ and compute a second error parameter $ERR(F_R2)$. In a way similar to what has been described with reference to the processing executed by the modules 40 and 42, processing by the module 44 can be repeated iteratively, varying the value of the force $F_R$ in a set of values that comprises M discrete ordered values and producing a corresponding set of values of the error parameter. At the end of the iterative cycle carried out by the module 44, the value of force corresponding to the lowest value of the error parameter ERR is selected as value of estimation $F_{R\_EST}$ of the force of rolling resistance.

In one or more preferred embodiments, the procedure carried out by the module 44 may comprise execution of further iterative cycles that make it possible to render more precise estimation of the force of rolling resistance, performing a finer division of the range of values over which the value of the parameter force is made to vary, in a way similar to what has already been described previously. The value selected at the end of execution of the last cycle is supplied at output by the module 44 as best estimate of the force of rolling resistance $F_{R\_EST}$.

In one or more preferred embodiments, the procedure may comprise a further level of iteration, in so far as the module 40 may be recalled again after execution of a first processing cycle by the modules 40, 42 and 44. In this case, the values of the inclination offset $\alpha_{OFF}$ and of the force of rolling resistance $F_R$ used in equation 11 will not be the default values, but will be those computed at the previous iterative step by the respective modules 42 and 44. A new execution of processing by the module 40 may be followed by a new execution by the module 42 and/or the module 44, with the possibility of repeating the sequence of processing by the modules 40, 42 and 44 a number of times that may even be high.

It will moreover be noted that in one or more embodiments the order in which the modules 40, 42 and 44 are recalled may be different from what has been described previously. For instance, the value of the parameter $\alpha_{OFF\_EST}$ could first be estimated using, in equation 11, the default values of the mass m and of the force of rolling resistance $F_R$, then the value of the parameter $F_{R\_EST}$ could be estimated using, in equation 11, the estimated value of $\alpha_{OFF\_EST}$ and the default value of the mass m, and finally the value of the parameter $M_{EST}$ could be estimated using, in equation 11, the estimated values of $\alpha_{OFF\_EST}$ and $F_{R\_EST}$.

It will moreover be noted that in one or more embodiments an iterative procedure can be implemented for estimating even just one or two of the parameters $M_{EST}$, $\alpha_{OFF\_EST}$, and $F_{R\_EST}$. For instance, iterative execution of just the module 40 could be recalled using, in equation 11, the default values of the inclination offset $\alpha_{OFF}$ and of the force of rolling resistance $F_R$.

In one or more embodiments, once processing of the data stored in the memory area 16 by the estimation module 18 is terminated, the vectors v[], T[], $\alpha$[], and k[] (i.e., the memory area 16) are reset.

Operation of the estimation module 18 described previously hence enables, for each sequence of data ARR[] sampled during a single sampling interval (for example, 5 seconds or 10 seconds), determination of a single value of mass $M_{EST}$, a single offset value $\alpha_{OFF\_EST}$, and/or a single value of force $F_{R\_EST}$.

In order to improve further the precision of the above estimates, in a preferred embodiment the method comprises repeating the estimation of mass, inclination offset and/or force a plurality of times, using data sampled during a plurality of successive sampling intervals, provided that the vehicle is in the appropriate condition of acceleration defined previously.

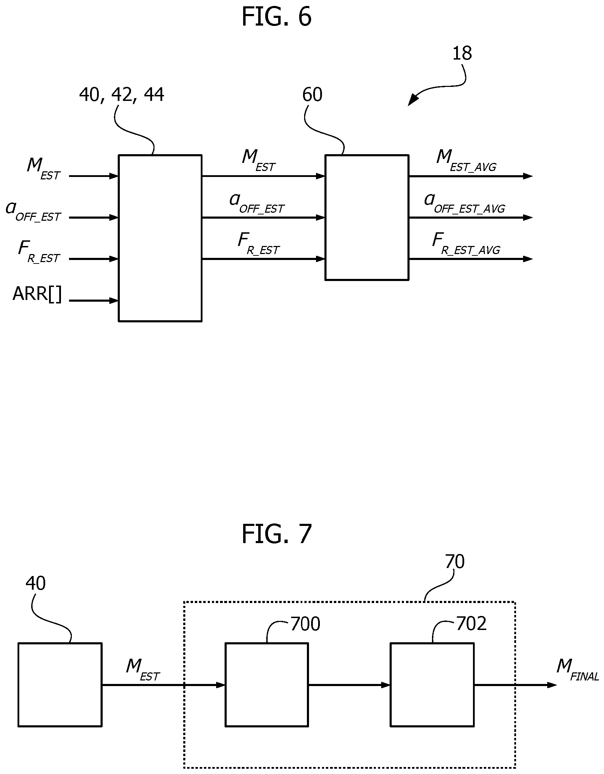

The plurality of values of mass, offset, and/or force thus produced can be the object of respective averaging operations in such a way as to produce averaged values that further improve the precision of the estimation. In particular, as illustrated in Figure 6, the estimation module 18 may comprise an average-computing module 60, which receives sequences of the values $M_{EST}$, $\alpha_{OFF\_EST}$, and/or $F_{R\_EST}$ estimated over time and, for each of said sequences, produces a respective average value $M_{EST\_AVG}$, $\alpha_{OFF\_EST\_AVG}$ and/or $F_{R\_EST\_AVG}$. In order not to uselessly store the entire sequences of values received in the module 60 from the modules 40, 42 and 44, each average value can be computed in an "incremental" way using an incremental counter j and the average value computed previously, according to equations 15, 16, and 17 below:

$$M_{EST\_AVG}^{\ j} = \frac{M_{EST\_AVG}^{\ j-1} \cdot (j-1) + M_{EST}}{j} \qquad (15)$$

$$\alpha_{OFF\_EST\_AVG}^{\ j} = \frac{\alpha_{OFF\_EST\_AVG}^{\ j-1} \cdot (j-1) + \alpha_{OFF\_EST}}{j} \qquad (16)$$

$$F_{R\_EST\_AVG}^{\ j} = \frac{F_{R\_EST\_AVG}^{\ j-1} \cdot (j-1) + F_{R\_EST}}{j} \qquad (17)$$

The average values thus computed can be updated at each new sampling interval (to which there corresponds generation of a new estimated value $M_{EST}$, $\alpha_{OFF\_EST}$ and/or $F_{R\_EST}$) in a continuous way, for example from the moment when the vehicle is set in motion, and can consequently refer to a large number of estimates. If, on the one hand, computing the average over a large number of sampling intervals enables improvement of the precision of the estimates by reducing the weight of possible transient events, on the other hand this average could be subject to "inertia", i.e., it could evolve slowly and might not be able to identify in a timely way the variations of the parameters of mass, inclination offset, and force of rolling resistance.

Consequently, in a preferred embodiment, the module 60 may be configured to store (for example, in a register of a First-In, First-Out type) only the most recently estimated values $M_{EST}$, $\alpha_{OFF\_EST}$, and/or $F_{R\_EST}$ (for example, the last ten or five values received) and for computing respective average "control" values that take into account only the most recent values. The control average values are compared with the "global" average values (i.e., the ones with longer memory) and if the control average value differs from the global average value by a percentage higher than a given threshold (for example, 30%), the global average value $M_{EST\_AVG}$, $\alpha_{OFF\_EST\_AVG}$, and/or $F_{R\_EST\_AVG}$ is reset, in so far as it is likely that a variation of the respective quantity has recently occurred (for example, the mass may vary because the vehicle is loaded with goods or else unloaded, or because the tank has been filled with fuel).

In a preferred embodiment, the estimation module 18 is moreover configured to determine a margin of error $M_{EST\_ERR}$ associated to the estimate of the mass $M_{EST}$, for example the standard deviation of the mass $M_{EST\_AVG}$. To determine the standard deviation two curves are used, one depending on the counter j, and one depending on the estimated mass $M_{EST\_AVG}$. The standard deviation may be computed as product of the values of these two curves corresponding to the current value of the counter and to the current value of the estimated mass $M_{EST\_AVG}$. The value of the mass supplied at output by the estimation module 18 may moreover be corrected by multiplying it by a factor that depends on the estimated mass $M_{EST\_AVG}$ (for example, as a function of a calibration curve, which can compensate for possible tendencies to over-estimation or under-estimation by the method described herein).

Figure 7 is a block diagram of a further embodiment in which a plurality of values of the estimated mass $M_{EST}$ (corresponding to a plurality of sampling intervals) are subjected to a different procedure for computing a final (averaged) value $M_{FINAL}$, averaged according to a different algorithm. In particular, the embodiment of Figure 7 proves advantageous when the number of iterations executed by blocks 40, 42 and 44 is limited (for example, on account of the limitedness of the processing resources on board the vehicle VEH).

As shown in Figure 7, a processing module 70 is configured to receive a plurality of discrete estimated values $M_{EST}$ (for example, constrained to one of the values m1, ..., m10 as in the example of Figure 5). A first processing block 700 determines whether each estimate $M_{EST}$ received belongs to a given category. For instance, five categories of masses are defined: VL (low), VML (medium-to-low), VM (medium), VMH (medium-to-high) and VH (high). Each category corresponds to a range delimited by respective upper and lower limits:

$$VL = [VL\_1, VL\_2];$$

$$VML = [VML\_1, VML\_2]$$

(possibly VML_1 = VL_2);

$$VM = [VM\_1, VM\_2]$$

(possibly VM_1 = VML_2);

$$VMH = [VMH\_1, VMH\_2]$$

(possibly VMH_1 = VM_2); and

$$VH = [VH\_1, VH\_2]$$

(possibly VH_1 = VMH_2).

When an estimate $M_{EST}$ received by block 40 is assigned to a given category, a corresponding counter is incremented. When the number of received estimates $M_{EST}$ exceeds a threshold value, the processing block 700 identifies the category containing the highest number of instances (i.e., the category to which the highest counter is associated) and within this category identifies the three values of mass that recur most frequently. A subsequent processing block 702 then determines an average value $M_{FINAL}$, corresponding to the average value computed only on the three values of mass that recur most frequently, weighted as a function of the respective instances. In a preferred embodiment, in order to prevent frequent oscillations between two different categories of masses while running the algorithm, a hysteresis can be implemented in such a way that passage from the previous category to a new category is made only if the difference between the number of instances in the new category and the number of instances in the previous category is higher than a given threshold, this threshold being greater than unity.

Obviously, the method described with reference to Figure 7 for computing a final value $M_{FINAL}$ of the mass may be equally applied to estimation of the inclination offset $\alpha_{OFF}$ and/or to estimation of the force of rolling resistance $F_R$.

The method described herein can be implemented in an electronic system that comprises one or more sensors configured to sense one or more parameters indicative of the dynamic state of the vehicle, and at least one electronic control unit configured to carry out the steps of the method.

Without prejudice to the underlying principles, the details and the embodiments may vary even considerably with respect to what has been described herein purely by way of example, without departing from the sphere of protection, as this is defined in the annexed claims.

**Claims**

1.  A method of estimating the mass of a moving vehicle (VEH), comprising:

    i) sensing (10) at least one first parameter *(ERC1_DR_ActRetPcTrq, ERC1_ER_ActRetPcTrq, ETC2_Transm-CurGear, EBC1_EbsBrkSw, EBC2_FA_speed, ETC1_TransmShiftinProc)* indicative of the dynamic state of the vehicle (VEH), said at least one first parameter comprising an acceleration of the vehicle;

    ii) determining (10), as a function of said at least one first parameter sensed, whether the dynamic state of the vehicle meets a given condition, wherein said determining (10) comprises verifying that the acceleration of the vehicle is higher than a respective threshold value;

    iii) in response to the fact that the dynamic state of the vehicle meets said given condition, sampling (12) and storing (16) respective ordered sequences of values of a plurality of second parameters (v[], T[], $\alpha$[], k[]) indicative of the dynamic state of the vehicle during a sampling interval, said plurality of second parameters comprising: the speed of the vehicle (v[]), the torque delivered by the engine of the vehicle (T[]), the sensed angle of longitudinal inclination of the vehicle ($\alpha$[]), and the transmission ratio between the engine and the drive wheels of the vehicle (k[]);

    iv) computing (18), for each value in said ordered sequences of values of said plurality of second parameters, a respective value of estimated speed of the vehicle as a function of: the stored values of said plurality of second parameters, a previous value of speed of the vehicle, a presumed mass of the vehicle, a presumed difference between the sensed angle of longitudinal inclination and the real angle of longitudinal inclination, and a presumed force of rolling resistance of the vehicle, to produce an ordered sequence of values of estimated speed of the vehicle;

v) computing (18) an error parameter as a function of differences computed between the values of sampled speed of the vehicle and the corresponding values of estimated speed of the vehicle;

vi) repeating (18, 40) steps iv) and v), varying the value of the presumed mass of the vehicle in a first interval (m1, ..., m10) comprising M discrete ordered values, to compute a plurality of M values of the error parameter; and

vii) selecting (18, 40), as estimated value of the mass of the vehicle ($M_{EST}$), the value that produces the lowest of said M computed values of the error parameter;

- repeating (10, 12, 16, 18) steps i) to vii) to determine a plurality of estimated values of the mass of the vehicle ($M_{EST}$), said estimated values being constrained to a set of pre-set discrete values;

- dividing (700) said plurality of estimated values of the mass of the vehicle into a set of categories, said categories corresponding to respective ranges of values, said ranges being adjacent to one another and such as to cover altogether said set of pre-set discrete values;

- identifying (700), from amongst said categories, the category containing the highest number of instances;

- selecting (700), within said identified category, P estimated values of the mass of the vehicle that present the highest number of instances;

- computing (702) a weighted average value of the mass of the vehicle limitedly to the instances of said P selected estimated values; and

- selecting (702), as estimated value of the mass of the vehicle ($M_{FINAL}$), said weighted average value.

2. The method of claim 1, comprising repeating (18, 40) steps vi) and vii), wherein at each repetition of step vi) the value of the presumed mass of the vehicle is varied in a second interval (m71, ..., m710) comprising M discrete ordered values, said second interval being centered around the value of mass (m7) selected at the previous execution of step vii), said second interval preferably having a width equal to twice the difference between two consecutive ordered values of said first interval.

3. The method of any of the preceding claims, comprising:

viii) repeating (18, 42) steps iv) and v), varying the value of the presumed difference between the sensed angle and the real angle of longitudinal inclination of the vehicle in a respective first interval comprising M discrete ordered values, to compute a plurality of M further values of the error parameter; and

ix) selecting (18, 42), as estimated value of the difference between the sensed angle and the real angle of longitudinal inclination of the vehicle ($\alpha_{OFF\_EST}$), the value that produces the lowest of said M further computed values of the error parameter.

4. The method of any of the preceding claims, comprising:

x) repeating (18, 44) steps iv) and v), varying the value of the presumed force of rolling resistance of the vehicle in a respective first interval comprising M discrete ordered values, to compute a plurality of M further values of the error parameter; and

xi) selecting (18, 44), as estimated value of the force of rolling resistance of the vehicle ($F_{R\_EST}$), the value that produces the lowest of said M further computed values of the error parameter.

5. The method of claims 3 and 4, comprising iteratively repeating (18, 40, 42, 44) steps vi), vii), viii), ix), x) and xi), using at each iteration, as values of presumed mass of the vehicle, presumed difference between the sensed angle of longitudinal inclination and the real angle of longitudinal inclination of the vehicle, and presumed force of rolling resistance of the vehicle, the respective values computed at the previous iteration ($M_{EST}$, $\alpha_{OFF\_EST}$, $F_{R\_EST}$).

6. The method of any of the preceding claims, comprising:

- repeating (10, 12, 16, 18) steps i) to vii) to determine a plurality of estimated values of the mass of the vehicle ($M_{EST}$);

- computing (60) a global average value ($M_{EST\_AVG}$) of said plurality of estimated values of the mass of the vehicle; and

- selecting (60), as estimated value of the mass of the vehicle, said global average value ($M_{EST\_AVG}$).

7. The method of claims 3 and 4, comprising:

- repeating (10, 12, 16, 18) steps i) to xi) to determine a plurality of estimated values of the mass of the vehicle

($M_{EST}$);
- computing (60) a global average value ($M_{EST\_AVG}$) of said plurality of estimated values of the mass of the vehicle; and
- selecting (60), as estimated value of the mass of the vehicle, said global average value ($M_{EST\_AVG}$).

**8.** The method of claim 6 or claim 7, comprising:

- computing (60) a control average value of a subset of said plurality of estimated values of the mass of the vehicle ($M_{EST}$), said subset having a cardinality lower than said plurality of estimated values of the mass of the vehicle ($M_{EST}$) and comprising only the most recent estimated values; and
- resetting (60) said global average value ($M_{EST\_AVG}$) of said plurality of estimated values of the mass of the vehicle ($M_{EST}$) in response to the fact that said control average value differs from said global average value ($M_{EST\_AVG}$) by a percentage higher than or equal to a given threshold, said threshold being preferably equal to 30%.

**9.** The method of any of the preceding claims, comprising estimating the transmission ratio between the engine and the drive wheels of the vehicle (k[]) as a function of a lowpass-filtered ratio between a sensed rotational speed of the engine and the speed of the vehicle.

**10.** The method of any of the preceding claims, wherein said error parameter is computed as a function of the sum of the squared errors between the values of sampled speed of the vehicle and the corresponding values of estimated speed of the vehicle.

**11.** The method of claims 1, 3 and 4, comprising:

- repeating (10, 12, 16, 18) steps viii) to xi) in addition to steps i) to vii) to determine said plurality of estimated values of the mass of the vehicle ($M_{EST}$) constrained to a set of pre-set discrete values.

**12.** The method of any of the preceding claims, wherein said at least one first parameter indicative of the dynamic state of the vehicle further comprises at least one parameter selected from among:

- the speed of the vehicle (*EBC2*_FA_speed);
- a signal indicative of a gear shift in progress *(ETC 1_TransmShiftInProc);*
- a signal indicative of a gear engaged (*ETC2_TransmCurGear*);
- a signal indicative of activation of a retarder device acting on the transmission of the vehicle (*ERC1_DR_ActRetPcTrq*);
- a signal indicative of activation of a retarder device acting on the engine of the vehicle (*ERC1_ER_ActRetPcTrq*);
- a signal indicative of activation of a braking system of the vehicle *(EBC1_EbsBrkSw);*
- a signal indicative of activation of an antilock braking system of the vehicle;
- a signal indicative of activation of a brake-assist system of the vehicle; and
- a signal indicative of a communication anomaly in a communication network of the vehicle;

and wherein determining (10) whether the dynamic state of the vehicle meets said given condition further comprises at least one of the following:

- verifying that the speed of the vehicle is comprised between a lower threshold value and an upper threshold value;
- verifying that there is no gear change in progress;
- verifying that a gear is engaged;
- verifying that the retarder device acting on the transmission of the vehicle is not active;
- verifying that the retarder device acting on the engine of the vehicle is not active;
- verifying that the braking system of the vehicle is not active;
- verifying that the antilock braking system of the vehicle is not active;
- verifying that the brake-assist system of the vehicle is not active; and
- verifying that there are no communication anomalies in the communication network of the vehicle.

**13.** An electronic system (1) for estimating the mass of a moving vehicle (VEH), comprising:

- at least one first sensor configured for sensing at least one first parameter (*ERC1_DR_ActRetPcTrq, ERC1_ER_ActRetPcTrq, ETC2_TransmCurGear, EBC1_EbsBrkSw, EBC2_FA_speed, ETC1_TransmShiftin-Proc*) indicative of the dynamic state of the vehicle (VEH);
- at least one second sensor configured to sense a plurality of second parameters (v[], T[], α[], k[]) indicative of the dynamic state of the vehicle (VEH); and
- an electronic control unit (10, 12, 14, 16, 18) configured to carry out the steps of the method according to any of the preceding claims.

14. A computer program product that can be loaded into a memory of an electronic control unit of a system according to claim 13 and comprising software code instructions for carrying out the steps of the method according to any of claims 1 to 12 as a result of said computer program product being executed on said electronic control unit.

**Patentansprüche**

1. Verfahren zum Schätzen der Masse eines sich bewegenden Fahrzeugs (VEH), umfassend:

   i) Erfassen (10) mindestens eines ersten Parameters *(ERC1_DR_ActRetPcTrq, ERC1_ER_ActRetPcTrq, ETC2_TransmCurGear, EBC1_EbsBrkSw, EBC2_FA_speed, ETC1_TransmShiftIn Proc),* die den dynamischen Status des Fahrzeugs (VEH) angeben, wobei der mindestens eine erste Parameter eine Beschleunigung des Fahrzeugs umfasst;
   ii) Bestimmen (10), als eine Funktion des mindestens einen erfassten ersten Parameters, ob der dynamische Status des Fahrzeugs eine gegebene Bedingung erfüllt, wobei Bestimmen (10) Verifizieren umfasst, dass die Beschleunigung des Fahrzeugs höher als ein entsprechender Schwellenwert ist;
   iii) als Antwort auf die Tatsache, dass der dynamische Status des Fahrzeugs die gegebene Bedingung erfüllt, Abtasten (12) und Speichern (16) entsprechender geordneter Sequenzen von Werten einer Vielzahl von zweiten Parametern (v[], T[], a[], k[]), die den dynamischen Status des Fahrzeugs während eines Abtastintervalls angeben, wobei die Vielzahl von zweiten Parametern Folgendes umfasst: die Geschwindigkeit (v[]) des Fahrzeugs, das vom Motor des Fahrzeugs gelieferte Drehmoment (T[]), den erfassten Längsneigungswinkel (α[]) des Fahrzeugs, und das Übersetzungsverhältnis (k[]) zwischen dem Motor und den Antriebsrädern des Fahrzeugs;
   iv) Berechnen (18), für jeden Wert in den geordneten Sequenzen von Werten der Vielzahl von zweiten Parametern, eines entsprechenden Werts der geschätzten Geschwindigkeit des Fahrzeugs als eine Funktion von: den gespeicherten Werten der Vielzahl von zweiten Parametern, einem vorherigen Wert der Geschwindigkeit des Fahrzeugs, einer angenommenen Masse des Fahrzeugs, einer angenommenen Differenz zwischen dem erfassten Längsneigungswinkel und dem tatsächlichen Längsneigungswinkel und einer angenommenen Kraft des Rollwiderstands des Fahrzeugs, um eine geordnete Sequenz von Werten der geschätzten Geschwindigkeit des Fahrzeugs zu erzeugen;
   v) Berechnen (18) eines Fehlerparameters als eine Funktion von Differenzen, die zwischen den Werten der abgetasteten Geschwindigkeit des Fahrzeugs und den entsprechenden Werten der geschätzten Geschwindigkeit des Fahrzeugs berechnet werden;
   vi) Wiederholen (18, 40) der Schritte iv) und v), Variieren des Wertes der angenommenen Masse des Fahrzeugs in einem ersten Intervall (m1, ..., m10), das M diskrete geordnete Werte umfasst, um eine Vielzahl von M Werten des Fehlerparameters zu berechnen; und
   vii) Auswählen (18, 40), als geschätzten Wert der Masse des Fahrzeugs ($M_{EST}$), des Werts, der den niedrigsten der M berechneten Werte des Fehlerparameters produziert;
   - Wiederholen (10, 12, 16, 18) der Schritte i) bis vii), um eine Vielzahl von geschätzten Werten der Masse des Fahrzeugs ($M_{EST}$), zu bestimmen, wobei die geschätzten Werte auf einen Satz von voreingestellten diskreten Werten beschränkt sind;
   - Unterteilen (700) der Vielzahl von geschätzten Werten der Masse des Fahrzeugs in einen Satz von Kategorien, wobei die Kategorien entsprechenden Wertebereichen entsprechen, wobei die Bereiche aneinander grenzen und so, dass sie insgesamt den Satz von voreingestellten diskreten Werten abdecken;
   - Identifizieren (700), aus den Kategorien, der Kategorie, die die höchste Anzahl von Instanzen enthält;
   - Auswahl (700), innerhalb der identifizierten Kategorie, von P geschätzten Werten der Masse des Fahrzeugs, die die höchste Anzahl von Instanzen präsentieren;
   - Berechnen (702) eines gewichteten Durchschnittswertes der Masse des Fahrzeugs, beschränkt auf die Instanzen der P ausgewählten geschätzten Werte; und
   - Auswählen (702) des gewichteten Durchschnittswerts als geschätzter Wert der Masse des Fahrzeugs ($M_{FINAL}$),.

2. Verfahren nach Anspruch 1, umfassend Wiederholen (18, 40) der Schritte vi) und vii), wobei bei jeder Wiederholung von Schritt vi) der Wert der angenommenen Masse des Fahrzeugs in einem zweiten Intervall (m71, ..., m710) variiert wird, das M diskrete geordnete Werte umfasst, wobei das zweite Intervall um den Wert der Masse (m7) zentriert ist, der bei der vorherigen Ausführung von Schritt vii) ausgewählt wurde, wobei das zweite Intervall vorzugsweise eine Breite aufweist, die gleich der doppelten Differenz zwischen zwei aufeinanderfolgenden geordneten Werten des ersten Intervalls ist.

3. Verfahren nach einem der vorstehenden Ansprüche, umfassend:

    viii) Wiederholen (18, 42) der Schritte iv) und v), Variieren des Wertes der angenommenen Differenz zwischen dem erfassten Winkel und dem realen Winkel der Längsneigung des Fahrzeugs in einem entsprechenden ersten Intervall, das M diskrete geordnete Werte umfasst, um eine Vielzahl von M weiteren Werten des Fehlerparameters zu berechnen; und
    ix) Auswählen (18, 42), als geschätzten Wert der Differenz zwischen dem erfassten Winkel und dem realen Winkel der Längsneigung des Fahrzeugs ($\alpha_{OFF\_EST}$), des Wertes, der den niedrigsten der M weiteren berechneten Werte des Fehlerparameters produziert.

4. Verfahren nach einem der vorstehenden Ansprüche, umfassend:

    x) Wiederholen (18, 44) der Schritte iv) und v), Variieren des Wertes der angenommenen Kraft des Rollwiderstands des Fahrzeugs in einem entsprechenden ersten Intervall, das M diskrete geordnete Werte umfasst, um eine Vielzahl von M weiteren Werten des Fehlerparameters zu berechnen; und
    xi) Auswählen (18, 44), als geschätzten Wert der Kraft des Rollwiderstands des Fahrzeugs ($F_{R\_EST}$), des Wertes, der den niedrigsten der M weiteren berechneten Werte des Fehlerparameters produziert.

5. Verfahren nach Ansprüche 3 und 4, umfassend das iterative Wiederholen (18, 40, 42, 44) der Schritte vi), vii), viii), ix), x) und xi), Verwenden bei jeder Iteration, als Werte der angenommenen Masse des Fahrzeugs, der angenommene Differenz zwischen dem erfassten Längsneigungswinkel und dem realen Längsneigungswinkel des Fahrzeugs, und der angenommenen Kraft des Rollwiderstands des Fahrzeugs, der bei jeder vorherigen Iteration berechneten Werte ($M_{EST}$, $\alpha_{OFF\_EST}$ $F_{R\_EST}$).

6. Verfahren nach einem der vorstehenden Ansprüche, umfassend:

    - Wiederholen (10, 12, 16, 18) der Schritte i) bis vii), um eine Vielzahl von geschätzten Werten der Masse des Fahrzeugs ($M_{EST}$) ZU BESTIMMEN;
    - Berechnen (60) eines globalen Durchschnittswertes ($M_{EST\_AVG}$) der Vielzahl von geschätzten Werten der Masse des Fahrzeugs; und
    - Auswählen (60) des globalen Durchschnittswerts ($M_{EST\_AVG}$) ALS GESCHÄTZTEN WERT DER MASSE DES FAHRZEUGS.

7. Verfahren nach Ansprüche 3 und 4, umfassend:

    - Wiederholen (10, 12, 16, 18) der Schritte i) bis xi), um eine Vielzahl von geschätzten Werten der Masse des Fahrzeugs ($M_{EST}$) ZU BESTIMMEN;
    - Berechnen (60) eines globalen Durchschnittswertes ($M_{EST\_AVG}$) der Vielzahl von geschätzten Werten der Masse des Fahrzeugs; und
    - Auswählen (60) des globalen Durchschnittswerts ($M_{EST\_AVG}$) ALS GESCHÄTZTEN WERT DER MASSE DES FAHRZEUGS.

8. Verfahren nach Anspruch 6 oder Anspruch 7, umfassend ($M_{EST}$);::

    - Berechnen (60) eines Steuerdurchschnittswertes eines Teilsatzes der Vielzahl von geschätzten Werten der Masse des Fahrzeugs, wobei der Teilsatz eine geringere Kardinalität aufweist als die Vielzahl von geschätzten Werten der Masse des Fahrzeugs ($M_{EST}$) und nur die jüngsten geschätzten Werte umfasst; und
    - Zurücksetzen (60) des globalen Durchschnittswertes ($M_{EST\_AVG}$) der Vielzahl von geschätzten Werten der Masse des Fahrzeugs ($M_{EST}$) als Antwort auf die Tatsache, dass der Steuerdurchschnittswert von dem globalen Durchschnittswert ($M_{ESTAVG}$) um einen Prozentsatz abweicht, der größer oder gleich einem gegebenen Schwellenwert ist, wobei dieser Schwellenwert vorzugsweise gleich 30% ist.

9. Verfahren nach einem der vorstehenden Ansprüche, umfassend Schätzen des Übersetzungsverhältnisses zwischen dem Motor und den Antriebsrädern des Fahrzeugs (k[]) als eine Funktion von einem tiefpassgefilterten Verhältnis zwischen einer erfassten Drehgeschwindigkeit des Motors und der Geschwindigkeit des Fahrzeugs.

10. Verfahren nach einem der vorstehenden Ansprüche, wobei der Fehlerparameter als eine Funktion der Summe der quadrierten Fehler zwischen den Werten der abgetasteten Geschwindigkeit des Fahrzeugs und den entsprechenden Werten der geschätzten Geschwindigkeit des Fahrzeugs berechnet wird.

11. Verfahren nach Anspruch 1, 3 und 4, umfassend:

- Wiederholen (10, 12, 16, 18) der Schritte viii) bis xi) zusätzlich zu den Schritten i) bis vii), um die Vielzahl von geschätzten Werten der Masse des Fahrzeugs ($M_{EST}$) zu bestimmen, die auf einen Satz voreingestellter diskreter Werte beschränkt sind.

12. Verfahren nach einem der vorstehenden Ansprüche, wobei der mindestens eine erste Parameter, der den dynamischen Status des Fahrzeugs angibt, weiter mindestens einen Parameter umfasst, der ausgewählt ist aus:

- der Geschwindigkeit des Fahrzeugs *(EBC2_FA_speed)*;
- einem Signal, das eine laufende Gangschaltung angibt (ET*C1_ TransmShiftinProc)*;
- ein Signal, das angibt, dass ein Gang eingelegt ist *(ETC2_TransmCurGear)'*,
- ein Signal, das die Aktivierung einer Retarder-Vorrichtung angibt, die auf das Getriebe des Fahrzeugs wirkt *(ERC1_DR_ActRetPcTrq)*,
- ein Signal, das die Aktivierung einer Retarder-Vorrichtung angibt, die auf den Motor des Fahrzeugs wirkt *(ERC1_ER_ActRetPcTrq)*
- ein Signal, das die Aktivierung eines Bremssystems des Fahrzeugs angibt *(EBC1_EbsBrkSw)*;
- ein Signal, das die Aktivierung eines Antiblockiersystems des Fahrzeugs angibt;
- ein Signal, das die Aktivierung eines Bremsassistenzsystems des Fahrzeugs angibt; und
- ein Signal, das eine Kommunikationsanomalie in einem Kommunikationsnetz des Fahrzeugs angibt;

und wobei Bestimmen (10), ob der dynamische Status des Fahrzeugs die gegebene Bedingung erfüllt, weiter mindestens eines von Folgendem umfasst:

- Verifizieren, dass die Geschwindigkeit des Fahrzeugs zwischen einem unteren Schwellenwert und einem oberen Schwellenwert liegt;
- Verifizieren, dass kein Gangwechsel im Gange ist;
- Verifizieren, dass ein Gang eingelegt ist;
- Verifizieren, dass die auf das Getriebe des Fahrzeugs wirkende Retarder-Vorrichtung nicht aktiv ist;
- Verifizieren, dass die auf den Motor des Fahrzeugs wirkende Retarder-Vorrichtung nicht aktiv ist;
- Verifizieren, dass das Bremssystem des Fahrzeugs nicht aktiv ist;
- verifizieren, dass das Antiblockiersystem des Fahrzeugs nicht aktiv ist;
- Verifizieren, dass das Bremsassistenzsystem des Fahrzeugs nicht aktiv ist; und
- Verifizieren, dass es keine Kommunikationsanomalien im Kommunikationsnetzwerk des Fahrzeugs gibt.

13. Elektronisches System (1) zum Schätzen der Masse eines sich bewegenden Fahrzeugs (VEH), umfassend:

- mindestens einen ersten Sensor, der konfiguriert ist, um mindestens einen ersten Parameter zu erfassen *(ERC1_DR_ActRetPcTrg.: ERC1_ER_ActRetPcTrq, ETC2_TransmCurGear, EBC1_EbsBrkSw, EBC2_FA_speed, ETC 1_ TransmShiftin Proc)*, der den dynamischen Status des Fahrzeugs (VEH) angibt;
- mindestens einen zweiten Sensor, der konfiguriert ist, um eine Vielzahl von zweiten Parametern (v[], T[], $\alpha$[], k[]) zu erfassen, die den dynamischen Status des Fahrzeugs (VEH) angeben; und
- eine elektronische Steuereinheit (10, 12, 14, 16, 18), die konfiguriert ist, um die Schritte des Verfahrens nach einem der vorstehenden Ansprüche auszuführen.

14. Computerprogrammprodukt, das in einen Speicher einer elektronischen Steuereinheit eines Systems nach Anspruch 13 geladen werden kann und Softwarecode-Anweisungen zum Ausführen der Schritte des Verfahrens nach einem der Ansprüche 1 bis 12 umfasst, wenn das Computerprogrammprodukt auf der elektronischen Steuereinheit ausgeführt wird.

**Revendications**

1. Procédé d'estimation de la masse d'un véhicule en mouvement (VEH), comprenant :

   i) la détection (10) d'au moins un premier paramètre *(ERC1_DR_ActRetPcTrq, ERC1_ER_ActRetPcTrq, ETC2_TransmCurGear, EBC1_EbsBrkSw, EBC2_FA_speed, ETC1_TransmShiftInProc)* indicatif de l'état dynamique du véhicule (VEH), ledit au moins un premier paramètre comprenant une accélération du véhicule ;
   ii) la détermination (10), en fonction dudit au moins un premier paramètre détecté, de si l'état dynamique du véhicule répond à une condition donnée, dans laquelle ladite détermination (10) comprend la vérification que l'accélération du véhicule est supérieure à une valeur seuil respective ;
   iii) en réponse au fait que l'état dynamique du véhicule répond à ladite condition donnée, l'échantillonnage (12) et le stockage (16) de séquences ordonnées respectives de valeurs d'une pluralité de seconds paramètres $(v[], T[], \alpha[], k[])$ indicatifs de l'état dynamique du véhicule pendant un intervalle d'échantillonnage, ladite pluralité de seconds paramètres comprenant : la vitesse du véhicule $(v[])$, le couple fourni par le moteur du véhicule $(T[])$, l'angle d'inclinaison longitudinale détecté du véhicule $(\alpha[])$ et le rapport de transmission entre le moteur et les roues motrices du véhicule $(k[])$ ;
   iv) le calcul (18), pour chaque valeur dans lesdites séquences ordonnées de valeurs de ladite pluralité de seconds paramètres, d'une valeur respective d'une vitesse estimée du véhicule en fonction : des valeurs stockées de ladite pluralité de seconds paramètres, d'une valeur précédente d'une vitesse du véhicule, d'une masse présumée du véhicule, d'une différence présumée entre l'angle d'inclinaison longitudinale détecté et l'angle d'inclinaison longitudinale réel, et d'une force présumée de résistance au roulement du véhicule, afin de produire une séquence ordonnée de valeurs de la vitesse estimée du véhicule ;
   v) le calcul (18) d'un paramètre d'erreur en fonction de différences calculées entre les valeurs de la vitesse échantillonnée du véhicule et les valeurs correspondantes de la vitesse estimée du véhicule ;
   vi) la répétition (18, 40) des étapes iv) et v), en faisant varier la valeur de la masse présumée du véhicule dans un premier intervalle (m1, ..., m10) comprenant M valeurs ordonnées discrètes, pour calculer une pluralité de M valeurs du paramètre d'erreur ; et
   vii) la sélection (18, 40), en tant que valeur estimée de la masse du véhicule $(M_{EST})$, de la valeur qui produit la plus faible des M valeurs calculées du paramètre d'erreur ;
   - la répétition (10, 12, 16, 18) des étapes i) à vii) pour déterminer une pluralité de valeurs estimées de la masse du véhicule $(M_{EST})$, lesdites valeurs estimées étant limitées à un ensemble de valeurs discrètes prédéfinies ;
   - la division (700) de ladite pluralité de valeurs estimées de la masse du véhicule en un ensemble de catégories, lesdites catégories correspondant à des plages respectives de valeurs, lesdites plages étant adjacentes les unes aux autres, et de manière à couvrir entièrement ledit ensemble de valeurs discrètes prédéfinies ;
   - l'identification (700), parmi lesdites catégories, de la catégorie contenant le plus grand nombre d'instances ;
   - la sélection (700), dans ladite catégorie identifiée, de P valeurs estimées de la masse du véhicule qui présentent le plus grand nombre d'instances ;
   - le calcul (702) d'une valeur moyenne pondérée de la masse du véhicule de façon limitée aux instances desdites P valeurs estimées sélectionnées ; et
   - la sélection (702), en tant que valeur estimée de la masse du véhicule $(M_{FINAL})$, de ladite valeur moyenne pondérée.

2. Procédé selon la revendication 1, comprenant la répétition (18, 40) des étapes vi) et vii), dans lequel, à chaque répétition de l'étape vi), la valeur de la masse présumée du véhicule est amenée à varier dans un second intervalle (m71, ..., m710) comprenant M valeurs ordonnées discrètes, ledit second intervalle étant centré autour de la valeur de la masse (m7) sélectionnée lors de l'exécution précédente de l'étape vii), ledit second intervalle ayant de préférence une largeur égale à deux fois la différence entre deux valeurs ordonnées consécutives dudit premier intervalle.

3. Procédé selon l'une quelconque des revendications précédentes, comprenant :

   viii) la répétition (18, 42) des étapes iv) et v), en faisant varier la valeur de la différence présumée entre l'angle détecté et l'angle d'inclinaison longitudinale réel du véhicule dans un premier intervalle respectif comprenant M valeurs ordonnées discrètes, pour calculer une pluralité de M autres valeurs du paramètre d'erreur ; et
   ix) la sélection (18, 42), en tant que valeur estimée de la différence entre l'angle détecté et l'angle d'inclinaison longitudinale réel du véhicule $(\alpha_{OFF\_EST})$, de la valeur qui produit la plus faible des M autres valeurs calculées du paramètre d'erreur.

4. Procédé de l'une quelconque des revendications précédentes, comprenant :

x) la répétition (18, 44) des étapes iv) et v), en faisant varier la valeur de la force présumée de résistance au roulement du véhicule dans un premier intervalle respectif comprenant M valeurs ordonnées discrètes, pour calculer une pluralité de M autres valeurs du paramètre d'erreur ; et

xi) la sélection (18, 44), en tant que valeur estimée de la force de résistance au roulement du véhicule ($F_{R\_EST}$), de la valeur qui produit la plus faible des M autres valeurs calculées du paramètre d'erreur.

**5.** Procédé selon les revendications 3 et 4, comprenant la répétition itérative (18, 40, 42, 44) des étapes vi), vii), viii), ix), x) et xi), en utilisant, à chaque itération, en tant que valeurs de la masse présumée du véhicule, la différence présumée entre l'angle d'inclinaison longitudinale détecté et l'angle d'inclinaison longitudinale réel du véhicule, la force présumée de résistance au roulement du véhicule, et les valeurs respectives calculées à l'itération précédente ($M_{EST}$, $\alpha_{OFF\_EST}$, $F_{R\_EST}$).

**6.** Procédé selon l'une quelconque des revendications précédentes, comprenant :

- la répétition (10, 12, 16, 18) des étapes i) à vii) pour déterminer une pluralité de valeurs estimées de la masse du véhicule ($M_{EST}$) ;
- le calcul (60) d'une valeur moyenne globale ($M_{EST\_AVG}$) de ladite pluralité de valeurs estimées de la masse du véhicule ; et
- la sélection (60), en tant que valeur estimée de la masse du véhicule, de ladite valeur moyenne globale ($M_{EST\_AVG}$).

**7.** Procédé selon les revendications 3 et 4, comprenant :

- la répétition (10, 12, 16, 18) des étapes i) à xi) pour déterminer une pluralité de valeurs estimées de la masse du véhicule ($M_{EST}$) ;
- le calcul (60) d'une valeur moyenne globale ($M_{EST\_AVG}$) de ladite pluralité de valeurs estimées de la masse du véhicule ; et
- la sélection (60), en tant que valeur estimée de la masse du véhicule, de ladite valeur moyenne globale ($M_{EST\_AVG}$).

**8.** Procédé selon la revendication 6 ou 7, comprenant :

- le calcul (60) d'une valeur moyenne de commande d'un sous-ensemble de ladite pluralité de valeurs estimées de la masse du véhicule ($M_{EST}$), ledit sous-ensemble ayant une cardinalité inférieure à celle de ladite pluralité de valeurs estimées de la masse du véhicule ($M_{EST}$) et ne comprenant que les valeurs estimées les plus récentes ; et
- la réinitialisation (60) de ladite valeur moyenne globale ($M_{EST\_AVG}$) de ladite pluralité de valeurs estimées de la masse du véhicule ($M_{EST}$) en réponse au fait que ladite valeur moyenne de commande diffère de ladite valeur moyenne globale ($M_{EST\_AVG}$) d'un pourcentage supérieur ou égal à un seuil donné, ledit seuil étant de préférence égal à 30%.

**9.** Procédé selon l'une quelconque des revendications précédentes, comprenant l'estimation du rapport de transmission entre le moteur et les roues motrices du véhicule (k[]) en fonction d'un rapport filtré passe-bas entre une vitesse de rotation détectée du moteur et la vitesse du véhicule.

**10.** Procédé selon l'une quelconque des revendications précédentes, dans lequel ledit paramètre d'erreur est calculé en fonction de la somme des erreurs au carré entre les valeurs de la vitesse échantillonnée du véhicule et les valeurs correspondantes de la vitesse estimée du véhicule.

**11.** Procédé selon les revendications 1, 3 et 4, comprenant :

- la répétition (10, 12, 16, 18) des étapes viii) à xi), outre les étapes i) à vii), pour déterminer ladite pluralité de valeurs estimées de la masse du véhicule ($M_{EST}$) limitées à un ensemble de valeurs discrètes prédéfinies.

**12.** Procédé selon l'une quelconque des revendications précédentes, dans lequel ledit au moins un premier paramètre indicatif de l'état dynamique du véhicule comprend en outre au moins un paramètre choisi parmi :

- la vitesse du véhicule (*EBC2_FA_speed*) ;
- un signal indicatif d'un changement de vitesse en cours (*ETC1_TransmShiftInProc*) ;

- un signal indicatif d'une vitesse engagée (*ETC2_TransmCurGear*) ;
- un signal indicatif de l'activation d'un dispositif ralentisseur agissant sur la transmission du véhicule (*ERC1_DR_ActRetPcTrq*) ;
- un signal indicatif de l'activation d'un dispositif ralentisseur agissant sur le moteur du véhicule (*ERC1_ER ActRetPcTrq*) :
- un signal indicatif de l'activation d'un système de freinage du véhicule *(EBC1_EbsBrkSw)* ;
- un signal indicatif de l'activation d'un système de freinage antiblocage du véhicule ;
- un signal indicatif de l'activation d'un système d'assistance au freinage du véhicule ; et
- un signal indicatif d'une anomalie de communication dans un réseau de communication du véhicule ;

et dans lequel la détermination (10) de si l'état dynamique du véhicule répond à ladite condition donnée comprend en outre au moins l'une de ce qui suit :

- la vérification que la vitesse du véhicule est comprise entre une valeur seuil inférieure et une valeur seuil supérieure ;
- la vérification qu'il n'y a pas de changement de vitesse en cours ;
- la vérification qu'une vitesse est engagée ;
- la vérification que le dispositif ralentisseur agissant sur la transmission du véhicule n'est pas actif ;
- la vérification que le dispositif ralentisseur agissant sur le moteur du véhicule n'est pas actif ;
- la vérification que le système de freinage du véhicule n'est pas actif ;
- la vérification que le système de freinage antiblocage du véhicule n'est pas actif ;
- la vérification que le système d'assistance au freinage du véhicule n'est pas actif ; et
- la vérification qu'il n'y a pas d'anomalies de communication dans le réseau de communication du véhicule.

13. Système électronique (1) permettant d'estimer la masse d'un véhicule en mouvement (VEH), comprenant :

- au moins un premier capteur configuré pour détecter au moins un premier paramètre (*ERC1_DR_ActRetPcTrq, ERC1_ER_ActRetPcTrq, ETC2_TransmCurGear, EBC1_EbsBrkSw, EBC2_FA_speed, ETC1_TransmShiftIn-Proc)* indicatif de l'état dynamique du véhicule (VEH) ;
- au moins un second capteur configuré pour détecter une pluralité de seconds paramètres (v[], T[], $\alpha$[], k[]) indicatifs de l'état dynamique du véhicule (VEH) ; et
- une unité de commande électronique (10, 12, 14, 16, 18) configurée pour mettre en œuvre les étapes du procédé selon l'une quelconque des revendications précédentes.

14. Produit-programme informatique qui peut être chargé dans une mémoire d'une unité de commande électronique d'un système selon la revendication 13 et comprenant des instructions de code logiciel pour mettre en œuvre les étapes du procédé selon l'une quelconque des revendications 1 à 12 suite à l'exécution dudit produit-programme informatique sur ladite unité de commande électronique.

FIG. 1

# FIG. 2

# FIG. 3

FIG. 4

FIG. 5

# FIG. 6

40, 42, 44

60

18

$M_{EST}$ →

$a_{OFF\_EST}$ →

$F_{R\_EST}$ →

ARR[] →

$M_{EST}$

$a_{OFF\_EST}$

$F_{R\_EST}$

$M_{EST\_AVG}$ →

$a_{OFF\_EST\_AVG}$ →

$F_{R\_EST\_AVG}$ →

# FIG. 7

40

70

700

702

$M_{EST}$

$M_{FINAL}$

**EP 4 170 299 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190226905 A1

- GB 2535773 A